# FASCICULE DE BREVET EUROPEEN

(11) **EP 3 221 689 B1**
(45) Date de publication et mention de la délivrance du brevet: **10.07.2024**
(21) Numéro de dépôt: 15798090.5
(22) Date de dépôt: 20.11.2015
(51) Int. Cl.: G01N 21/47, G01N 21/25, B01L 3/00, G01N 21/17, G03H 1/04

(54) **PROCÉDÉ D'OBSERVATION D'UNE PLURALITÉ D'ÉCHANTILLONS ET DISPOSITIF ASSOCIÉ**
VERFAHREN ZUR BEOBACHTUNG MEHRERER PROBEN UND ZUGEHÖRIGE VORRICHTUNG
PROCESS FOR OBSERVING A PLURALITY OF SAMPLES AND ASSOCIATED DEVICE

(30) Priorité: 20.11.2014 FR 1461250
(43) Date de publication de la demande: 27.09.2017
(73) Titulaire: Commissariat à l'Energie Atomique et aux Energies Alternatives, 75015 Paris (FR)
(72) Inventeur: MARCOUX, Pierre, 38120 Saint Egrève (FR); MOREL, Sophie, 38000 Grenoble (FR); ALLIER, Cédric, 38000 Grenoble (FR)
(74) Mandataire: Lavoix
(86) Numéro de dépôt international: PCT/EP2015/077262
(87) Numéro de publication internationale: WO 2016/079316

(56) Documents cités:
- US-A- 3 928 140
- US-A1- 2007 132 831
- US-A1- 2008 310 692
- US-B1- 7 016 523
- ALLIER C P ET AL: "Video lensfree microscopy of 2D and 3D culture of cells", PROGRESS IN BIOMEDICAL OPTICS AND IMAGING, SPIE - INTERNATIONAL SOCIETY FOR OPTICAL ENGINEERING, BELLINGHAM, WA, US, vol. 8947, 4 March 2014 (2014-03-04), pages 89471H - 89471H, XP060033864, ISSN: 1605-7422, DOI: 10.1117/12.2038098

## Description

La présente invention concerne un procédé d'observation d'une pluralité d'échantillons. L'invention se rapporte également à une plaque pour l'observation correspondante. L'invention concerne également un système d'observation d'une pluralité d'échantillons associé.

L'invention s'inscrit dans le domaine de la microbiologie et, plus précisément, celui de l'identification d'organismes biologiques et de l'étude de l'interaction des organismes avec un milieu.

Il est connu de faire des cultures d'organismes sur des milieux particuliers. Ces milieux sont des milieux nutritifs gélosés. Ces milieux permettent d'augmenter le nombre d'organismes prélevés, soit de manière spécifique soit en obtenant une séparation spatiale des différentes types d'organismes composant le prélèvement. L'amplification de manière spécifique est obtenue par la présence d'inhibiteurs favorisant la croissance de certains organismes au détriment d'autres. L'isolement spatial de différents types d'organismes n'est obtenu que dans le cas d'un prélèvement polymicrobien.

Un des inconvénients de la culture sur de tels milieux est le temps impliqué pour obtenir à partir d'un organisme unique un ensemble d'organismes qui soit observable et prélevable par un opérateur humain. Ceci requiert généralement une vingtaine de générations, soit un temps relativement important d'au moins 24 heures.

Il est également connu des systèmes d'observation des documents US 7 016 523 B1, US 2008/310692 A1, US 3 928 140 A et un article de C.P. Allier et al, PROGRESS IN BIOMEDICAL OPTICS AND IMAGING, Proc. of SPIE, 2014-03-04, Vol. 8947, pg. 89471H - 89471H-9, intitulé « Video lensfree microscopy of 2D and 3D culture of cells ».

Il existe donc un besoin pour un procédé d'observation d'au moins un échantillon comportant des organismes dont la mise en oeuvre est plus rapide que les documents de l'état de la technique.

Pour cela, il est proposé un procédé d'observation selon la revendication 1. Suivant des modes de réalisation particuliers, le procédé comprend une ou plusieurs des caractéristiques des revendications 2 à 9.

Il est aussi proposé un système d'observation selon la revendication 10.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique d'un exemple de système d'observation d'un échantillon, ne faisant pas partie de l'invention revendiquée ;
- figure 2, une vue schématique de côté d'un exemple d'une plaque pour l'observation d'une pluralité d'échantillons ;
- figure 3, une vue schématique d'un autre exemple de système d'observation d'une pluralité d'échantillons ;
- figure 4, un graphe présentant l'évolution du kurtosis dans une première expérience ;
- figure 5, un graphe présentant l'évolution du nombre de bactéries dans une première expérience ;
- figure 6, un graphe présentant l'évolution du kurtosis dans une deuxième expérience, et
- figure 7, un graphe présentant l'évolution du nombre de bactéries dans une deuxième expérience.

Dans la suite, il est défini les notions de « amont » et « aval » en référence au sens de propagation de la lumière.

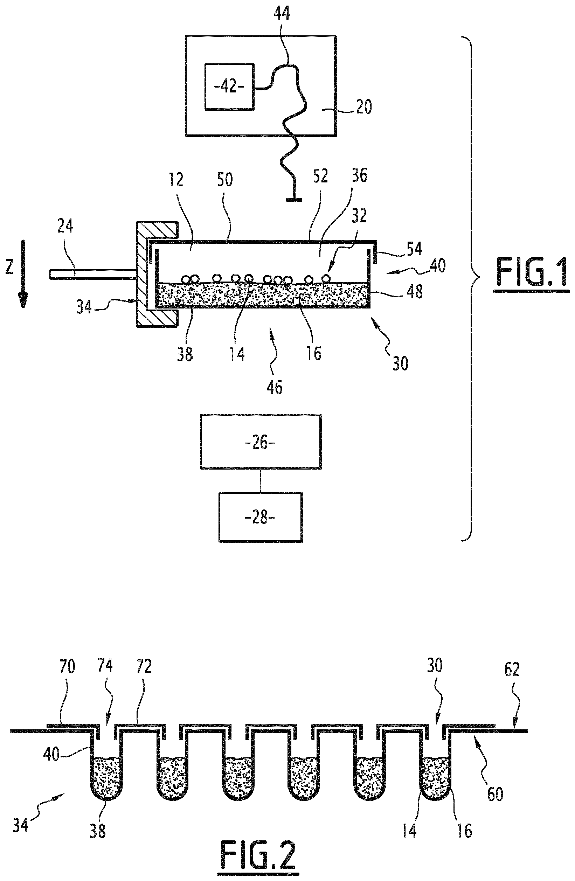

La figure 1 illustre un exemple de système d'observation 10 d'au moins un échantillon 12.

Le système d'observation 10 présenté à la figure 1 permet l'observation de l'échantillon 12. Le système d'observation 10 est ainsi propre à mettre en oeuvre un procédé d'observation de l'échantillon 12.

Le système d'observation 10 comporte depuis l'amont vers l'aval, une source lumineuse 20 propre à émettre un faisceau lumineux, un support 24 portant l'échantillon 12, un détecteur 26 et un calculateur 28.

Selon l'exemple particulier de la figure 1, un seul échantillon 12 est présent. Toutefois, dans le cas d'une pluralité d'échantillons 12, les remarques qui suivent concernant l'échantillon 12 de la figure 1 s'appliquent pour chaque échantillon 12 de la pluralité d'échantillons 12.

L'échantillon 12 est disposé entre la source de lumière 20 et le détecteur 26.

L'échantillon 12 comporte une enceinte 30, un ensemble d'organismes 32 comprenant une pluralité d'organismes 14 et un milieu de culture 16.

L'enceinte 30 comporte une paroi 34 délimitant au moins en partie un volume intérieur 36.

Une enceinte 30 est un récipient formé par un fond 38 et une paroi latérale 40.

Le fond 38 est réalisé en une matière transparente ou une matière translucide.

La paroi 34 de l'enceinte 30 est ainsi formée à la fois par le fond transparent 38 et la paroi latérale 40.

Selon les cas, un organisme 14 de l'ensemble d'organismes 32 est acellulaire ou cellulaire. Parmi les organismes cellulaires, sont usuellement distingués les organismes procaryotes et les organismes eucaryotes. Les archées (aussi appelées archaebactéries) et les bactéries sont des exemples d'organisme procaryote. Les organismes eucaryotes sont soit unicellulaires, soit pluricellulaires. A titre d'exemple, les protozoaires, les amibes, les algues ou les levures sont des organismes eucaryotes unicellulaires. Les organismes eucaryotes pluricellulaires sont des cellules issues, par exemple, de mammifères humain et non-humain, de champignons, de végétaux, de protistes ou de chromistes.

De préférence, par l'expression « organisme », il est entendu par exemple des microorganismes, en particulier des bactéries, des champignons ou des levures.

Le milieu de culture 16 comprend l'ensemble d'organismes 32.

Par milieu de culture, il est entendu un milieu dans lequel, ou à la surface duquel, baignent lesdits organismes 14. Ainsi, les organismes 14 sont répartis dans le milieu de culture 16 ou à la surface du milieu de culture 16.

Selon la composition chimique du milieu de culture 16 et la nature de l'organisme 14, un organisme 14 peut se développer, mourir ou se maintenir sans se développer. Lorsque l'organisme 14 est une bactérie, les termes de croissance bactérienne, de bactéricidie ou de bactériostase sont usuellement employés.

Le fonctionnement du système d'observation 10 est décrit en référence à un exemple mise en oeuvre d'un procédé d'observation de l'échantillon 12.

Le procédé comporte sept étapes référencées par une lettre dans la suite.

Le procédé comporte une première étape a) d'illumination de l'échantillon 12 par un faisceau lumineux émis par la source lumineuse 20.

Le procédé comporte également une deuxième étape b) d'acquisition d'une première image de l'échantillon 12 à un premier instant t₁.

La première image I₁ comprend une pluralité de motifs de diffraction. Chacun desdits motifs de diffraction est généré par l'interaction du faisceau lumineux émis par la source lumineuse 20 avec au moins un organisme 14 de l'ensemble d'organismes 32.

Plus précisément, chaque motif de diffraction résulte de l'interférence de photons diffusés élastiquement par au moins un organisme 14 de l'ensemble d'organismes 32 observé. Dans certains cas, les organismes 14 sont agglomérés de sorte qu'il est impossible de distinguer la contribution individuelle de chaque organisme 14. De manière générale, le motif de diffraction obtenu pour au moins un organisme 14 de l'ensemble d'organismes 32 se présente le plus souvent sous la forme d'une partie centrale d'intensité homogène, la partie centrale étant entourée d'anneaux concentriques alternativement clairs (intensité élevée) et sombres (intensité faible).

L'étape b) d'acquisition est mise en oeuvre à l'aide du détecteur 26.

Le procédé comporte aussi une troisième étape c) d'obtention d'un premier indicateur Ind, à partir de la première image I₁.

Le premier indicateur Ind, est représentatif de la quantité d'organismes 14 présents dans l'échantillon 12 au premier instant t₁.

Par définition, une grandeur est représentative de la quantité d'organismes 14 présents dans l'échantillon 12 lorsqu'il existe un lien mathématique entre la grandeur et la quantité d'organismes 14 présents dans l'échantillon 12.

A titre d'exemple, la grandeur est proportionnelle à la quantité d'organismes 14 présents dans l'échantillon 12.

Toutefois, des liens mathématiques plus complexes sont envisageables. Un logarithme de la quantité d'organismes 14 présents dans l'échantillon 12 est également une grandeur représentative de la quantité d'organismes 14 présents dans l'échantillon 12.

Pour mettre en oeuvre l'étape c) d'obtention du premier indicateur Ind₁, plusieurs modes de réalisation distincts sont envisageables.

Par exemple, l'étape c) d'obtention du premier indicateur Ind, comporte une étape d'application d'une fonction k à la première image I₁ pour obtenir un premier indicateur Ind₁.

Selon un autre exemple, l'étape c) d'obtention du premier indicateur Ind, comporte une étape d'analyse de la première image I₁.

Une telle analyse comprend usuellement l'identification de chaque motif de diffraction présent dans la première image I₁ et l'étude d'au moins une propriété de chacun des motifs identifiés.

L'étape c) d'obtention du premier indicateur Ind, est généralement mise en oeuvre à l'aide du calculateur 28.

Le procédé comporte ensuite une quatrième étape d) d'acquisition d'une deuxième image l₂ de l'échantillon 12 à un deuxième instant t₂.

La deuxième image 12 comprend une pluralité de motifs de diffraction, chacun desdits motifs de diffraction étant généré par l'interaction dit faisceau lumineux avec au moins un organisme 14 de l'ensemble d'organismes 32.

Le deuxième instant t₂ est postérieur au premier instant t₁.

Les mêmes remarques que pour l'étape b) précédente s'appliquent également pour l'étape d) et ne sont donc pas répétées ici.

Le procédé comporte ensuite une cinquième étape e) d'obtention d'un deuxième indicateur Ind₂ à partir de la deuxième image I₂. Le deuxième indicateur Ind₂ est représentatif de la quantité d'organismes 14 présents dans ledit échantillon 12 au deuxième instant t₂.

Les mêmes remarques que pour l'étape c) précédente s'appliquent également pour l'étape e) et ne sont donc pas répétées ici.

De préférence, la mise en oeuvre de la troisième étape c) et de la cinquième étape e) impliquent les mêmes étapes appliquées respectivement à la première image I₁ et à la deuxième image I₂.

Le procédé comporte aussi une sixième étape f) de comparaison du premier indicateur Ind, et du deuxième indicateur Ind₂.

L'étape f) consiste généralement en une simple comparaison des valeurs du premier indicateur Ind, et du deuxième indicateur Ind₂ pour ordonner les deux indicateurs Ind, et Ind₂. L'ordre des deux indicateurs Ind, et Ind₂ est alors le résultat de l'étape f) de comparaison.

L'étape f) de comparaison est usuellement mise en oeuvre par le calculateur 28.

Le procédé comprend également une septième étape g) de détermination d'au moins une caractéristique relative à l'ensemble d'organismes 14 à partir du résultat de l'étape f) de comparaison.

Le procédé permet donc de déterminer une caractéristique relative à l'ensemble d'organismes 32 à partir de la comparaison de deux indicateurs Ind₁ et Ind₂. Une telle comparaison est aisée à mettre en oeuvre puisqu'il s'agit d'une comparaison quantitative.

Cela permet un suivi quantitatif, et en particulier un suivi en ligne du développement des organismes 14 dans l'échantillon 12. Un tel suivi peut être établi à intervalle de temps régulier. Le fait d'obtenir pour chaque image un indicateur rend le procédé aisément automatisable et généralisable à plus de deux images.

En outre, si la caractéristique à déterminer est l'aptitude d'un organisme 14 à se développer ou non dans le milieu de culture 16, le procédé proposé permet une détermination plus précoce que les procédés de l'art antérieurs, basés sur la détection d'un changement de couleur.

Selon un mode de réalisation particulier, il est d'abord rappelé que chacune des images I₁, I₂ présente une distribution spatiale d'intensité c'est-à-dire que chacune des images I₁, I₂ présente une distribution spatiale des niveaux d'intensité des pixels constituant l'image considérée. Les étapes c) et e) d'obtention d'un indicateur Ind₁, ind₂ à partir d'une image I₁, I₂ correspondante comporte une étape d'application d'une fonction k à l'image I₁, I₂ correspondante pour obtenir un résultat. Cela signifie que l'image par la fonction k d'une image I₁, I₂ est le résultat.

Avantageusement, ladite fonction k permet d'obtenir comme résultat un moment d'ordre n de la distribution spatiale d'intensité de l'image, n étant un entier supérieur ou égal à 1.

Par exemple, l'entier n est égal à 2, 3 ou 4 ou strictement supérieur à 4.

De préférence, la fonction k appliquée sur une image est le kurtosis, c'est-à-dire le moment d'ordre 4 de ladite distribution en intensité de l'image considérée.

Pour simplifier les calculs, il est préférable que le résultat obtenu par la fonction k soit directement l'indicateur Ind₁, Ind₂ à obtenir.

Mathématiquement, cela signifie que k(I₁) = Ind, et k(I₂) = Ind₂.

De telles fonctions présentent l'avantage d'obtenir des indicateurs Ind₁, ind₂ qui sont des indicateurs scalaires. Cela permet de faciliter la mise en oeuvre de l'étape f) de comparaison entre les deux indicateurs Ind₁ et ind₂.

Selon un autre mode de réalisation, les étapes c) et e) d'obtention d'un indicateur Ind₁, ind₂ à partir d'une image I₁, I₂ correspondante comportent une étape d'estimation de la surface occupée par les organismes 14 dans l'image I₁, I₂ correspondante.

Selon un mode de réalisation particulier, les étapes c) et e) d'obtention d'un indicateur Ind₁, Ind₂ à partir d'une image I₁, I₂ correspondante comportent une étape d'identification des différents motifs de diffraction présents dans l'image I₁, I₂ correspondante suivie par une étape d'application d'une fonction aux motifs identifiés.

L'identification de chaque motif peut être réalisée par l'application d'un noyau de corrélation à l'image I₁, I₂ considérée, ledit noyau représentant un modèle de motif de diffraction. Un tel modèle peut être préalablement établi au cours d'une phase de calibration.

Par exemple, une fonction envisageable est de déterminer la surface occupée par chacun des motifs. Une telle surface est, selon un cas particulier, définie comme l'aire occupée par la projection du motif central (zone brillante au centre) du motif de diffraction sur l'image I₁, I₂ considérée. De manière commode, une telle surface est, par exemple, exprimée en nombre de pixels de l'image I₁, I₂ considérée.

Selon un autre exemple, la fonction consiste en un dénombrement des différents motifs de diffraction présents dans l'image I₁, I₂ considérée.

Selon un mode de réalisation particulier, chacun des éléments faisant partie du système d'observation 10, à savoir la source lumineuse 20, le support 24, le détecteur 26 et le calculateur 28, est propre à mettre en oeuvre une partie du procédé d'observation. C'est notamment le cas pour les éléments du système d'observation 10 de la figure 1.

La collaboration entre chacun des éléments du système d'observation 10 assure ainsi la mise en oeuvre du procédé d'observation de sorte qu'un système d'observation 10 muni uniquement de la source lumineuse 20, du support 24, du détecteur 26 et du calculateur 28 suffit pour mettre en oeuvre le procédé d'observation.

Plus précisément, la mise en oeuvre de l'étape a) est permise par le fait que la source lumineuse 20 est adaptée à émettre un faisceau lumineux et que le support 24 est adapté à accueillir l'échantillon 12 de sorte que l'échantillon 12 soit illuminé par le faisceau lumineux que la source lumineuse 20 est adaptée à émettre.

De plus, le détecteur 26 est propre à mettre en oeuvre les étapes b) et d) d'acquisition. Ainsi, le détecteur 26 est adapté à acquérir la première image I₁ au premier instant t₁ et la deuxième image I₂ au deuxième instant t₂.

En outre, le calculateur 28 est adapté à mettre en oeuvre les étapes c) et e) d'obtention, l'étape f) de comparaison et l'étape g) de détermination. Aussi, le calculateur 28 est adapté à obtenir un premier indicateur Ind, à partir de la première image I1, à obtenir un deuxième indicateur lnd₂ à partir de la deuxième image I2, à comparer le premier indicateur Ind, et le deuxième indicateur Ind₂ et déterminer au moins une caractéristique relative à l'ensemble d'organismes 32 à partir du résultat de la comparaison du premier indicateur Ind, avec le deuxième indicateur Ind₂.

En particulier, il est à noter qu'il n'y a pas d'optique de grossissement entre l'échantillon 12 et le détecteur 26. Autrement dit, il n'y a pas d'optique de grossissement entre le détecteur 26 et l'échantillon 12 observé. La détection est ainsi mise en oeuvre selon une configuration dite lens-free ou lens-less. Cela n'exclut pas la présence de microlentilles au niveau de chaque pixel du détecteur 26.

Selon un mode de réalisation ne faisant pas partie de l'invention revendiquée, le système d'observation 10 est le système représenté à la figure 1.

Dans l'exemple représenté, la source lumineuse 20 est une source de lumière blanche 42 et une fibre optique 44. La source de lumière 42 étant reliée à la fibre optique 44 de sorte qu'une partie de la lumière émise par la source de lumière 42 soit injectée en entrée de la fibre optique 44.

Il est entendu par l'expression « lumière blanche », une lumière ayant des composantes dans l'ensemble du spectre visible, le spectre visible correspondant aux ondes électromagnétiques ayant une longueur d'onde comprise entre 400 nm (nanomètres) et 800 nm.

Dans l'exemple représenté à la figure 1, la source lumineuse 20 est disposée à quelques centimètres de l'échantillon 12, par exemple entre 2 cm (centimètres) et 10 cm.

Cela signifie que la distance entre la source lumineuse 20 et l'échantillon 12 est comprise entre 2 cm et 10 cm. Une grandeur X est comprise entre deux valeurs A et B lorsque d'une part, la grandeur X est supérieure ou égale à A et d'autre part, la grandeur X est inférieure ou égale à B.

La distance entre la source lumineuse 20 et l'échantillon 12 est, par exemple, définie comme la distance euclidienne la plus faible entre deux points appartenant à la source lumineuse 20 et à l'échantillon 12.

Avantageusement, la source lumineuse 20 est une source lumineuse spatialement cohérente. Par définition, une source lumineuse 20 est considérée comme spatialement cohérente lorsque les faisceaux issus de deux points appartenant à la source lumineuse 20 peuvent interférer avec une fonction de visibilité associée aux interférences générées supérieure ou égale à 0,5, les deux points étant espacés d'un micron.

Une telle cohérence spatiale est notamment obtenue en utilisant un filtre spatial comportant une ouverture de type sténopé. Le filtre spatial est alors disposé entre la source lumineuse 20 et l'échantillon 12, en étant placé le plus proche possible de la source de lumière.

Alternativement, selon l'exemple illustré par la figure 1, la fibre optique 44 est utilisée pour limiter l'étendue spatiale de la source de lumière 42, résultant en une meilleure cohérence spatiale. La cohérence spatiale est également obtenue en utilisant le fait que la sortie d'une fibre optique 44 présente une étendue limitée.

Comme c'est le cas pour la figure 1, la source lumineuse 20 est incohérente du point de vue temporel. Par définition, une source lumineuse 20 est considérée comme temporellement incohérente lorsque la longueur de cohérence temporelle de la source lumineuse 20 est inférieure à la distance entre la source lumineuse 20 et l'échantillon 12.

Une diode électroluminescente, aussi désignée par l'acronyme anglais LED pour « Light-Emitting Diode », est un autre exemple de source lumineuse 20 incohérente du point de vue temporel.

La demanderesse a constaté que l'emploi d'une source lumineuse incohérente du point du vue temporel permet l'obtention d'images dont la qualité est adaptée pour la mise en oeuvre du procédé d'observation. Dans certains cas, l'emploi d'une source lumineuse non cohérente du point du vue temporel a permis l'obtention de meilleurs résultats qu'une source de lumière cohérente. Cela rend l'emploi d'une source cohérente souvent plus chère non nécessaire, ce qui facilite la mise en oeuvre du système 10.

En variante, toutefois, la source lumineuse 20 est temporellement cohérente, c'est-à-dire que la longueur de cohérence temporelle de la source lumineuse 20 est supérieure à la distance entre la source lumineuse 20 et l'échantillon 12. Par exemple, la source lumineuse 20 est une diode laser.

Dans le cas particulier de la figure 1, le détecteur 26 est, par exemple, un capteur de type CMOS, c'est-à-dire un capteur formé à l'aide de la technologie CMOS. L'acronyme CMOS renvoie à l'expression anglaise « Complementary Metal Oxide Semiconductor ».

De préférence, le détecteur 26 comporte une pluralité de pixels, chaque pixel étant un carré dont le côté présente une dimension inférieure ou égale à 5 µm (microns). Avantageusement, chaque pixel étant un carré dont le côté présente une dimension inférieure ou égale à 3 µm.

Selon le mode de réalisation de la figure 1, le détecteur 26 est propre à acquérir des images en transmission de l'échantillon 12.

De préférence, le détecteur 26 est placé à une distance de l'échantillon 12 inférieure ou égale à 1 cm, voire inférieure ou égale à 5 mm (millimètres).

Une telle distance de limiter l'effet d'interférences entre les différents motifs de diffraction générés par chacun des organismes 14 de l'échantillon 12. Autrement formulé, une telle distance permet d'obtenir, sur chaque image, des motifs de diffractions exploitables.

La distance entre le détecteur 26 et l'échantillon 12 est, par exemple, définie comme la distance euclidienne la plus faible entre deux points appartenant au détecteur 26 et à l'échantillon 12.

De manière alternative, la distance entre le détecteur 26 et l'échantillon 12 est définie comme la distance euclidienne la plus grande entre deux points appartenant au détecteur 26 et à l'échantillon 12.

Selon une autre variante, la distance entre le détecteur 26 et l'échantillon 12 est, définie comme la distance euclidienne entre un point appartenant au détecteur 26 et le centre géométrique de l'enceinte 30 de l'échantillon 12.

Selon l'exemple particulier de la figure 1, le calculateur 28 se présente sous la forme d'un microprocesseur comportant une mémoire comportant des instructions permettant la mise en oeuvre des étapes c), e), f) et g) du procédé.

L'enceinte 30 est, dans le cas de la figure 1, une boîte de Pétri.

L'enceinte 30 comporte une partie formant fond 46, la partie formant fond 46 étant formée par le fond 38 et d'une première paroi latérale 48.

La paroi 34 de l'enceinte 30 est au moins formée par le fond 38 et la première paroi latérale 48.

Le fond 38 est transparent et est destiné à être placé en regard du détecteur 26, de façon à ce que le détecteur 26 collecte le signal lumineux transmis par l'échantillon 12.

La partie formant fond 46 a une forme cylindrique à base circulaire.

Selon l'exemple particulier de la figure 1, l'enceinte 30 comporte, en outre, une partie formant couvercle 50. La partie formant couvercle 50 est optionnelle et permet de refermer l'enceinte 30. La partie formant couvercle 50 est amovible.

La partie formant couvercle 50 est formée par un couvercle 52 et une deuxième paroi latérale 54.

Le couvercle 52 est transparent.

Le couvercle 52 est, par exemple, disposé parallèlement au fond 38.

La deuxième paroi latérale 54 recouvre en partie la première paroi latérale 48.

Pour le cas particulier de la figure 1, la paroi 34 de l'enceinte 30 est formée par le fond 38, la première paroi latérale 48, la deuxième paroi latérale 54 et le couvercle 52. Le volume intérieur 36 est ainsi limité dans une première direction par le fond 38 et le couvercle 52 et dans une deuxième direction par les deux parois latérales 48, 54.

Le système 10 est également utilisable pour d'autres échantillons 12, et en particulier, pour une pluralité d'échantillons 12.

Ainsi, selon un mode de réalisation particulier, la pluralité d'échantillons 12 fait partie d'un même support, les enceintes 30 étant disposées adjacentes les unes aux autres.

Par exemple, la pluralité d'échantillons 12 fait partie d'une plaque 60 pour l'observation d'une pluralité d'échantillons 12.

La plaque 60 comportant la pluralité d'enceintes 30, chaque enceinte 30 formant un puits. Comme précédemment, chaque puits comporte un milieu de culture 16, chaque milieu de culture 16 comprenant un ensemble d'organismes 32.

Du fait de la présence d'une pluralité de puits, la plaque 60 est dite « plaque à puits ». Par exemple, dans certains modes de réalisation, la plaque 60 comporte 96 puits.

La plaque 60 s'étend principalement le long d'une surface dite surface principale 62. Selon l'exemple de la figure 2, la surface principale 62 est perpendiculaire à un axe vertical noté Z.

Pour illuminer chacun des puits, la source de lumière 20 peut être commune à l'ensemble des enceintes 30, ou déplacée, par exemple à l'aide d'une translation dans un plan parallèle à la surface principale 64.

Pour assurer une bonne acquisition des images dans ce cas, le détecteur 26 peut être déplacé, par exemple à l'aide d'une platine de translation dans un plan parallèle au plan du support. Alternativement, le support comprend une pluralité de détecteurs élémentaires.

Selon un mode de réalisation, lorsque le détecteur 26 est plus petit que le diamètre d'un puits, des platines de translation permettent d'acquérir une pluralité de parties d'images de sorte qu'une image résulte de la concaténation d'une pluralité parties d'images acquises par le détecteur 26.

Par exemple, l'image résulte de la concaténation de quatre parties d'images acquises par le détecteur 26.

Selon une variante, chaque enceinte 30 est un puits d'une carte de test d'identification. Ce type de carte est communément disponible. Par exemple, il est connu la carte Vitek, marque déposée, commercialisée par la société Biomérieux.

Chaque enceinte 30 comporte un milieu de culture, par exemple liquide comprenant un ensemble d'organismes 32. En effet, avantageusement, chaque milieu de culture 16 est un milieu liquide.

De plus, lorsqu'une pluralité d'échantillons 12 est considérée, il est favorable que chaque échantillon 12 comporte des organismes 14 appartenant à la même espèce. Cela permet d'effectuer plusieurs expériences pour faciliter l'interprétation des résultats de la comparaison des indicateurs Ind₁ et ind₂. Des exemples particuliers sont détaillés ci-après.

Selon un mode de réalisation, chaque enceinte 30 comprend un même milieu de culture, par exemple un milieu liquide Mueller-Hinton 2 (noté milieu MH2 dans la suite de la description) auquel est ajouté, sur différentes enceinte, une concentration différente d'un même antibiotique.

Par exemple, une première enceinte 30 comprend une première concentration dudit antibiotique tandis qu'une deuxième enceinte 30 comprend une deuxième concentration dudit antibiotique, la deuxième concentration étant différente de la première concentration. Le procédé permet alors de déterminer la concentration minimale inhibitrice de l'antibiotique vis-à-vis de l'organisme 14 considéré, c'est-à-dire la concentration au-delà de laquelle l'organisme 14 cesse de se développer.

Formulé autrement, le milieu de culture 16 de chaque échantillon 12 comporte un antibiotique. De plus, la concentration en antibiotique dans le milieu de culture 16 varie selon l'échantillon 12 considéré. Dans ce cas, il est possible de déterminer à l'étape g) une caractéristique relative également à l'antibiotique comme la sensibilité à l'antibiotique ou la concentration minimale inhibitrice de l'organisme 14 à l'antibiotique.

Selon un mode de réalisation, chaque enceinte 30 peut comprendre un même milieu de culture 16 auquel est ajouté, selon l'enceinte 30 considérée, différents antibiotiques. Par exemple, une première enceinte 30 comprend un premier antibiotique tandis qu'une deuxième enceinte 30 comprend un deuxième antibiotique, le deuxième antibiotique étant différent du premier antibiotique.

Selon un mode de réalisation, il est disposé de plusieurs enceintes 30, comportant chacune un milieu de culture 16 différents l'une de l'autre, chaque milieu de culture 16 étant propice au développement sélectif de certains organismes 14. Par exemple, une première enceinte 30 comprend un premier milieu 16, tandis qu'une deuxième enceinte 30 comprend un deuxième milieu 16, le deuxième milieu 16 étant différent du premier milieu 16. Le procédé permet alors d'identifier l'organisme 14, par la connaissance des milieux de culture 16 dans lequel l'organisme 14 se développe et les milieux de culture 16 dans lesquels l'organisme 14 ne se développe pas. Autrement dit, le milieu de culture 16 varie selon l'échantillon 12 considéré et la caractéristique déterminée à l'étape g) est l'espèce des organismes 14.

En pratique, la demanderesse a constaté que des artefacts d'illumination sont introduits par l'illumination de la plaque 60. En effet, les parois 40 de chaque enceinte 30 agissent comme des guides d'ondes.

Pour limiter de tels artefacts, le procédé comporte une étape de masquage d'une partie de la paroi latérale 40 de chaque enceinte 30 par interposition d'un masque 70 entre la source lumineuse 20 et chaque échantillon 12. Le masque 70 comprend une partie opaque 72. La partie opaque 72 est agencée pour empêcher que, lors de l'étape a), la paroi latérale 40 soit illuminée par une partie du faisceau lumineux émis par la source lumineuse 20 n'ayant pas interagi avec le milieu de culture 16 de l'échantillon 12.

Plus précisément, le procédé comporte une étape de masquage d'une partie de la paroi latérale 40 de chaque enceinte 30, à l'aide du masque 70 comportant une partie opaque 72, la partie opaque 72 délimitant des ouvertures 74. Le masque 70 est alors disposé entre la source de lumière 20 et chaque échantillon 12. Chaque ouverture 74 du masque 70 est placée en vis-à-vis de chaque milieu de culture 16. La partie opaque du masque 70 est disposée, entre chaque enceinte 30 et la source de lumière 20, de façon à recouvrir partiellement la paroi latérale 40 de chaque enceinte 30.

Le masque 70 sert à limiter les artefacts d'illumination introduits par l'illumination de la plaque 60. La présence du masque 70 empêche la propagation de lumière dans la paroi 34 de chaque enceinte 30, ce qui permet d'éviter la formation de lumière parasite. Il en résulte une augmentation du rapport signal sur bruit.

Autrement dit, l'étape de masquage permet d'assurer que le faisceau lumineux n'illumine pas la paroi 34 de chaque enceinte 30 avant d'atteindre le milieu de culture 16. Il est ainsi évité que la paroi 34 redirige une partie de la lumière, à laquelle la paroi 34 est exposée, dans l'échantillon 12 analysé. L'expérience montre que les images ainsi obtenues conduisent à de meilleurs résultats.

De ce fait, la plaque 60 de la figure 2 comporte, en outre, un tel masque 70. La partie opaque 72 est agencée spatialement pour empêcher que, lorsque la plaque 60 est illuminée par un faisceau lumineux, la paroi latérale 40 de chaque enceinte 30 soit illuminée par une partie du faisceau lumineux n'ayant pas interagi avec le milieu de culture 16 que l'espace intérieur 36 de l'enceinte 30 considérée est destiné à accueillir.

Le masque 70 est, selon l'exemple de la figure 2, en papier aluminium.

D'autres matières opaques au faisceau émis par la source lumineuse 20 sont envisageables pour le masque 70.

Le masque 70 repose sur la surface principale 62 de la plaque 62.

Selon une variante, la plaque 60 comprend un couvercle amovible, apte à renfermer chaque puits. Dans ce cas, le masque 70 peut être intégré dans le couvercle de la plaque 60. Le couvercle présente alors une partie opaque 72, délimitant des zones transparentes, de telle sorte que chaque zone transparente est en vis-à-vis du contenu d'une enceinte 30, tandis que la partie opaque 72 recouvre une partie de la paroi latérale 34 de ladite enceinte 30 s'étendant perpendiculairement audit couvercle.

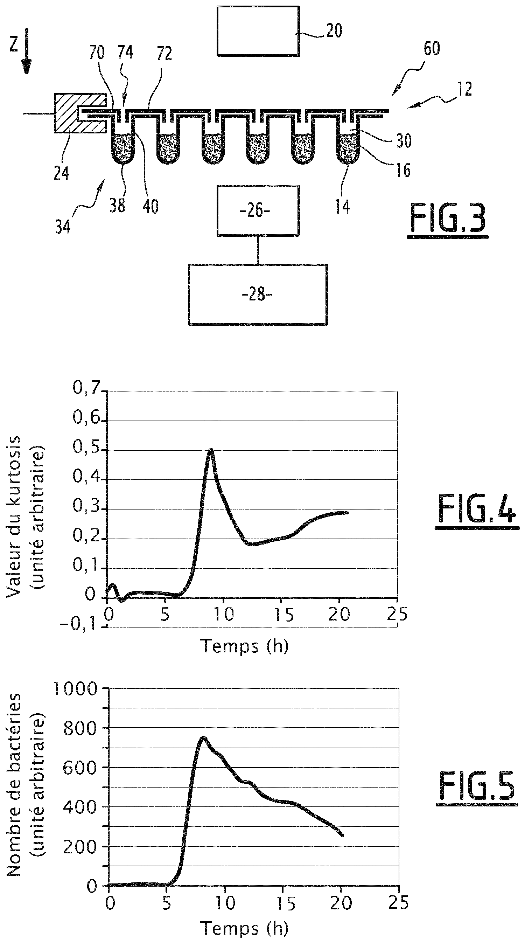

Selon un autre mode de réalisation illustré par la figure 3, le système d'observation 10 comprend des éléments identiques aux éléments du système d'observation 10 de la figure 1, de sorte que les mêmes remarques s'appliquent également pour ce système d'observation 10. Dans la suite, seules les différences sont mises en évidence.

Le système d'observation 10 comporte la plaque 60 de la figure 2.

En fonctionnement, le système d'observation 10 de la figure 3 permet de mener des expériences dont les résultats sont montrés aux figures 4 à 7.

Des bactéries sont introduites dans trente-deux puits de la plaque 60.

Les trente-deux puits sont répartis en huit groupes. Chaque groupe comporte quatre enceintes comportant un même milieu de culture. Le premier groupe correspond au milieu de culture AMY (l'acronyme signifiant amygdalin), le deuxième groupe correspond au milieu de culture MEL (l'acronyme signifiant melibiose), le troisième groupe correspond au milieu de culture SAC (l'acronyme signifiant sucrose), le quatrième groupe correspond au milieu de culture RHA (l'acronyme signifiant rhamnose), le cinquième groupe correspond au milieu de culture SOR (l'acronyme signifiant sorbitol), le sixième groupe correspond au milieu de culture INO (l'acronyme signifiant inositol), le septième groupe correspond au milieu de culture MAN(l'acronyme signifiant mannitol) et le huitième groupe correspond au milieu de culture GLU(l'acronyme signifiant glucose).

Dans chaque groupe, sont insérés dans deux puits des organismes 14 à une première concentration et dans les deux autres puits des organismes à une deuxième concentration. Dans chacun des cas, la première concentration est de 2.10⁴ cfu (acronyme pour « *colony-forming unit* » soit unité de formation de colonie) et la deuxième concentration est de 2.10³ cfu.

Le suivi de la population bactérienne est effectué dans chaque puits par imagerie sans lentille.

Plus précisément, le détecteur 26 acquiert des images toutes les 30 minutes pendant 25 heures environ.

Selon une première expérience (milieu MEL et deuxième concentration) dans laquelle les bactéries sont dans un milieu sensible, les figures 4 et 5 sont obtenues. La figure 4 montre la variation de la valeur du kurtosis avec le temps tandis que la figure 5 montre la variation du nombre de bactéries avec le temps. L'instant t=0 correspond à 30 minutes après l'insertion des bactéries dans le milieu de culture considéré.

Comme attendu, le nombre de bactéries diminue au bout d'un certain temps du fait que les bactéries sont sensibles au milieu ambiant. Le nombre de bactéries est déterminé par un algorithme de dénombrement du nombre de motifs de diffractions dans l'image observée.

Il est observé que le kurtosis varie de manière similaire. Cela correspond au fait que le kurtosis est une mesure du degré d'uniformité d'une surface. Plus la valeur du kurtosis est élevée, plus la surface présente des pics et des vallées de forte amplitude et de fortes pentes. Lorsque le nombre de bactéries augmente, le nombre de motifs de diffraction augmente, ce qui correspond à l'apparition d'un plus grand nombre de pics et de vallées.

Dans cette première expérience, l'observation de la variation du kurtosis permet donc bien de déterminer si les bactéries sont sensibles au milieu.

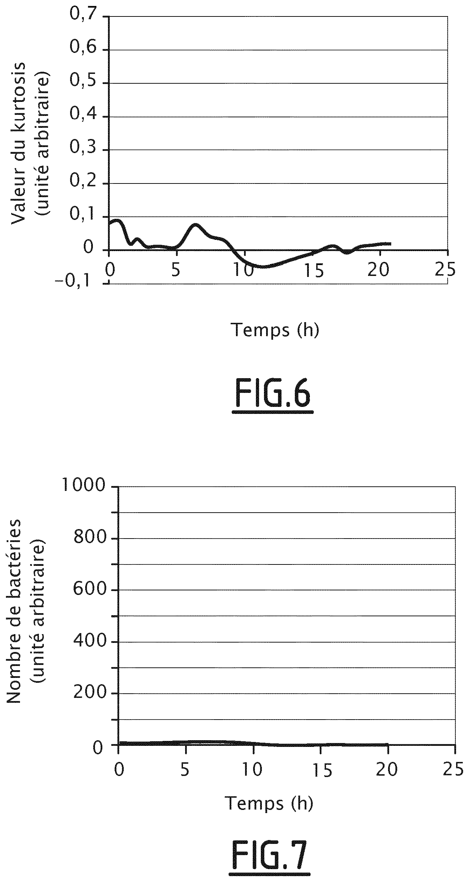

Selon une deuxième expérience (milieu SAC et première concentration) dans laquelle les bactéries sont dans un milieu non sensible, les figures 6 et 7 sont obtenues. Comme attendu, le nombre de bactéries reste sensiblement constant avec le temps du fait que les bactéries ne sont pas sensibles au milieu ambiant. Il est observé que le kurtosis varie de manière similaire. Dans cette deuxième expérience, l'observation de la variation du Kurtosis permet donc bien de déterminer si les bactéries sont non sensibles au milieu. Ainsi il est possible d'évaluer l'aptitude des bactéries à se développer dans chaque milieu de culture 16.

Des figures analogues sont obtenues pour chacune des expériences menées. Le tableau 1 qui suit résume les résultats obtenus :

**Tableau 1 : Résultats d'expériences menées avec le système de la figure 3**

| *Milieu de culture (Nombre d'expéri ences)* | *Concentration* | *Evolution temporelle du nombre de bactéries* | *Evolution temporelle de la valeur du kurtosis* | *Test* |
|---|---|---|---|---|
| AMY (2) | première | analogue figure 7 | analogue figure 6 | négatif |
| AMY (2) | deuxième | analogue figure 7 | analogue figure 6 | négatif |
| MEL (2) | première | analogue figure 5 | analogue figure 4 | positif |
| MEL (2) | deuxième | analogue figure 5 | analogue figure 4 | positif |
| SAC (2) | deuxième | analogue figure 7 | analogue figure 6 | négatif |
| RHA (2) | première | analogue figure 5 | analogue figure 4 | positif |
| RHA (2) | deuxième | analogue figure 5 | analogue figure 4 | positif |
| SOR (2) | première | analogue figure 5 | analogue figure 4 | positif |
| SOR (2) | deuxième | analogue figure 5 | analogue figure 4 | positif |
| INO (2) | première | analogue figure 7 | analogue figure 6 | négatif |
| INO (2) | deuxième | analogue figure 7 | analogue figure 6 | négatif |
| MAN (2) | première | analogue figure 5 | analogue figure 4 | positif |
| MAN (2) | deuxième | analogue figure 5 | analogue figure 4 | positif |
| GLU (2) | première | analogue figure 5 | analogue figure 4 | positif |
| GLU (2) | deuxième | analogue figure 5 | analogue figure 4 | positif |

Le test est déclaré positif lorsque la population bactérienne se développe dans le milieu de culture 16. Le test est déclaré négatif lorsque la population bactérie stagne ou décroît dans le milieu de culture 16.

Il a ainsi été montré qu'il est possible que la caractéristique déterminée à l'étape g) est un paramètre relatif à l'aptitude d'un organisme 14 de l'ensemble d'organismes 32 à se développer sur le milieu de culture 16.

En effet, il peut être défini, à titre d'exemple, que le paramètre est égal à une première valeur lorsque le premier indicateur Ind₁ est strictement supérieur au deuxième indicateur Ind₂ et le paramètre est égal à une deuxième valeur lorsque le premier indicateur Ind₁ est inférieur ou égal au deuxième indicateur Ind₂, la première valeur et la deuxième valeur étant distinctes. Lorsque le paramètre est égal à la première valeur, cela signifie que la population bactérienne se développe dans le milieu de culture 16 alors que lorsque le paramètre est égal à la deuxième valeur, la population bactérie stagne ou décroît dans le milieu de culture 16.

Les résultats exposés dans le tableau 1 ont été confrontés à la méthode de référence, consistant à observer le changement de couleur de chaque milieu de culture en cas de développement de la croissance bactérienne.

Il est à noter qu'alors que plusieurs heures, voire dizaines d'heures sont nécessaires à l'observation d'un éventuel changement de couleur du milieu de culture, le procédé d'observation permet d'obtenir un résultat quantitatif fiable dans un intervalle de temps bien plus faible, typiquement entre 2 et 6 heures. Il en résulte une caractérisation plus précoce de l'organisme 14 observé.

Le procédé d'observation permet donc bien d'obtenir des caractéristiques de l'échantillon 12, notamment la sensibilité des organismes 14 à un antibiotique à partir de l'analyse de l'évolution temporelle des valeurs d'une fonction de kurtosis appliquée à des images de diffraction obtenues lors de la mise en oeuvre des expériences.

Le procédé est, en outre, simple à mettre en oeuvre puisque le système 10 est un système sans lentille.

## Revendications

1. Procédé d'observation d'une pluralité d'échantillons (12), chaque échantillon (12) comprenant :
- une enceinte (30) formant un puits et comprenant une paroi (34) délimitant au moins en partie un espace intérieur (36), la paroi (34) de chaque enceinte (30) comportant une paroi latérale (40),
- un ensemble d'organismes (32) comprenant une pluralité d'organismes (14), et
- un milieu de culture (16), ledit milieu de culture (16) comprenant l'ensemble d'organismes (32), ledit milieu de culture (16) étant contenu dans l'espace intérieur (36),
chaque échantillon (12) comportant des organismes (14) appartenant à la même espèce,
le procédé comportant, pour chaque échantillon (12), les étapes de :
a) illumination de l'échantillon (12) par un faisceau lumineux émis par une source lumineuse (20),
b) acquisition d'une première image (I₁) de l'échantillon (12) à un premier instant (t₁), la première image (I₁) comprenant une pluralité de motifs de diffraction, chacun desdits motifs de diffraction étant généré par l'interaction dudit faisceau lumineux avec au moins un organisme (14) de l'ensemble d'organismes (32),
c) obtention d'un premier indicateur (Ind₁) à partir de la première image (I₁), le premier indicateur (Ind₁) étant représentatif de la quantité d'organismes (14) présents dans ledit échantillon (12) au premier instant (t₁),
d) acquisition d'une deuxième image (l₂) de l'échantillon (12) à un deuxième instant (t₂), la deuxième image (l₂) comprenant une pluralité de motifs de diffraction, chacun desdits motifs de diffraction étant généré par l'interaction dudit faisceau lumineux avec au moins un organisme (14) de l'ensemble d'organismes (32), le deuxième instant (t₂) étant postérieur au premier instant (t₁),
e) obtention d'un deuxième indicateur (Ind₂) à partir de la deuxième image (I₂), le deuxième indicateur (lnd₂) étant représentatif de la quantité d'organismes (14) présents dans ledit échantillon (12) au deuxième instant (t₂),
f) comparaison du premier indicateur (Ind₁) et du deuxième indicateur (Ind₂), et
g) détermination d'au moins une caractéristique relative à l'ensemble d'organismes (32) à partir du résultat de l'étape de comparaison, chaque caractéristique déterminée à l'étape g) étant l'aptitude d'un organisme (14) de l'ensemble d'organismes (32) à se développer dans le milieu de culture (16),
le procédé étant tel qu'au moins une des deux propositions suivantes est vérifiée :
- le milieu de culture (16) varie selon l'échantillon (12) considéré, une caractéristique déterminée à l'étape g) étant l'espèce des organismes (14), et
- le milieu de culture (16) de chaque échantillon (12) comporte un antibiotique, la concentration en antibiotique dans le milieu de culture (16) variant selon l'échantillon (12) considéré, une caractéristique déterminée à l'étape g) étant la concentration minimale inhibitrice de l'organisme (14) à l'antibiotique,
le procédé étant **caractérisé en ce que** le procédé comporte, en outre, une étape de :
- masquage d'une partie de la paroi latérale (40) de chaque enceinte (30) par interposition d'un masque (70) entre la source lumineuse (20) et chaque échantillon (12), le masque (70) comprenant une partie opaque (72), la partie opaque (72) étant agencée spatialement pour empêcher que, lors de l'étape a), la paroi latérale (40) soit illuminée par une partie du faisceau lumineux émis par la source lumineuse (20) n'ayant pas interagi avec le milieu de culture (16) de l'échantillon (12).

2. Procédé selon la revendication 1, dans lequel au moins un milieu de culture (16) est un milieu liquide.

3. Procédé selon la revendication 1 ou 2, dans lequel chaque milieu de culture (16) est un milieu liquide.

4. Procédé selon l'une quelconque des revendications 1 à 3, dans lequel la source lumineuse (20) utilisée à l'étape a) est incohérente du point de vue temporel.

5. Procédé selon la revendication 4, dans lequel la source lumineuse (20) est une diode électroluminescente.

6. Procédé selon l'une quelconque des revendications 1 à 5, dans lequel l'aptitude d'un organisme (14) de l'ensemble d'organismes (32) à se développer sur le milieu de culture (16) étant déterminée par évaluation d'un paramètre, le paramètre est égal à une première valeur lorsque le premier indicateur (Ind₁) est strictement supérieur au deuxième indicateur (Ind₂) et le paramètre est égal à une deuxième valeur lorsque le premier indicateur (Ind₁) est inférieur ou égal au deuxième indicateur (Ind₂), la première valeur et la deuxième valeur étant distinctes.

7. Procédé selon l'une quelconque des revendications 1 à 6, chaque image (I₁, I₂) présente une distribution spatiale d'intensité, chaque étape d'obtention d'un indicateur (Ind₁, Ind₂) à partir d'une image (I₁, I₂) correspondante comportant une étape de :
- application d'une fonction (k) à l'image (I₁, I₂) correspondante, ladite fonction (k) ayant pour résultat un moment d'ordre n de la distribution spatiale d'intensité de l'image (I₁, I₂) correspondante lorsque ladite fonction (k) est appliquée à l'image (I₁, I₂) correspondante, n étant un entier supérieur ou égal à 1, de préférence égal à 4.

8. Procédé selon l'une quelconque des revendications 1 à 6, dans lequel chaque étape d'obtention d'un indicateur (Ind₁, ind₂) à partir d'une image (I₁, I₂) correspondante comporte une étape de :
- identification de chaque motif de diffraction présent dans l'image (I₁, I₂) correspondante (I₁, I₂), et
- détermination de la surface de chaque motif de diffraction identifié.

9. Procédé selon l'une quelconque des revendications 1 à 6, dans lequel chaque étape d'obtention d'un indicateur (Ind₁, Ind₂) à partir d'une image (I₁, I₂) correspondante comporte une étape de :
- identification de chaque motif de diffraction présent dans l'image (I₁, I₂) correspondante, et
- détermination du nombre de motifs de diffraction identifiés.

10. Système d'observation (10) d'une pluralité d'échantillons (12), chaque échantillon (12) comprenant :
- une enceinte (30) formant un puits comprenant une paroi délimitant au moins en partie un espace intérieur (36),
- un ensemble d'organismes (32) comprenant une pluralité d'organismes (14), et
- un milieu de culture (16), ledit milieu de culture (16) comprenant l'ensemble d'organismes (32), ledit milieu de culture (16) étant contenu dans l'espace intérieur (36),
chaque échantillon (12) comportant des organismes (14) appartenant à la même espèce,
le système d'observation (10) comprenant :
- une source lumineuse (20) adaptée à émettre un faisceau lumineux,
- un support (24) adapté à accueillir les échantillon s(12) de sorte qu'un des échantillons (12) soit illuminé par le faisceau lumineux que la source lumineuse (20) est adaptée à émettre,
- un détecteur (26) adapté à acquérir :
∘ une première image (I₁) de l'échantillon (12) à un premier instant (t₁), la première image (I₁) comprenant une pluralité de motifs de diffraction, chacun desdits motifs de diffraction étant généré par l'interaction dudit faisceau lumineux que la source lumineuse (20) est adaptée à émettre avec au moins un organisme (14) de l'ensemble d'organismes (32), et
∘ une deuxième image (I₂) de l'échantillon (12) à un deuxième instant (t₂), la deuxième image (I₂) comprenant une pluralité de motifs de diffraction, chacun desdits motifs de diffraction étant généré par l'interaction dudit faisceau lumineux que la source lumineuse (20) est adaptée à émettre avec au moins un organisme (14) de l'ensemble d'organismes (32), le deuxième instant (t₂) étant postérieur au premier instant (t₁), et
- un calculateur (28) adapté à :
∘ obtenir un premier indicateur (Ind₁) à partir de la première image (I₁) que le détecteur (26) est adapté à obtenir, le premier indicateur (Ind₁) étant représentatif de la quantité d'organismes (14) présents dans ledit échantillon (12) au premier instant (t₁),
∘ obtenir un deuxième indicateur (Ind₂) à partir de la deuxième image (I₂), le deuxième indicateur (Ind₂) étant représentatif de la quantité d'organismes (14) présents dans ledit échantillon (12) au deuxième instant (t₂),
∘ comparer le premier indicateur (Ind₁) et le deuxième indicateur (Ind₂), et
∘ déterminer au moins une caractéristique relative à l'ensemble d'organismes (32) à partir du résultat de la comparaison du premier indicateur (Ind₁) avec le deuxième indicateur (lnd₂), chaque caractéristique déterminée étant l'aptitude d'un organisme (14) de l'ensemble d'organismes (32) à se développer dans le milieu de culture (16),
le système d'observation (10) étant tel qu'au moins une des deux propositions suivantes est vérifiée :
- le milieu de culture (16) varie selon l'échantillon (12) considéré, une caractéristique déterminée étant l'espèce des organismes (14), et
- le milieu de culture (16) de chaque échantillon (12) comporte un antibiotique, la concentration en antibiotique dans le milieu de culture (16) variant selon l'échantillon (12) considéré, une caractéristique déterminée étant la concentration minimale inhibitrice de l'organisme (14) à l'antibiotique,
le système d'observation (10) comportant une plaque (60) pour l'observation de la pluralité d'échantillons (12), la plaque (60) comportant :
- la pluralité d'enceintes (30), la paroi (34) de chaque enceinte (30) comportant une paroi latérale (40),
le système d'observation (10) étant **caractérisé en ce que** le système d'observation (10) comporte, en outre :
- un masque (70) comportant une partie opaque (72), la partie opaque (72) étant agencée spatialement pour empêcher que, lorsque la plaque (60) est illuminée par le faisceau lumineux que la source lumineuse (20) est adaptée à émettre, la paroi latérale (40) de chaque enceinte (30) soit illuminée par une partie du faisceau lumineux que la source lumineuse (20) est adaptée à émettre, la partie du faisceau lumineux n'ayant pas interagi avec le milieu de culture (16) contenu dans l'espace intérieur (36) de l'enceinte (30) considérée.

## Patentansprüche

1. Verfahren zum Beobachten einer Vielzahl von Proben (12), wobei jede Probe (12) umfasst:
- eine Einfassung (30), die einen Schacht bildet und eine Wand (34) umfasst, die zumindest teilweise einen Innenraum (36) begrenzt, wobei die Wand (34) jeder Einfassung (30) eine Seitenwand (40) aufweist,
- einen Satz von Organismen (32), der eine Vielzahl von Organismen (14) umfasst, und
- ein Kulturmedium (16), wobei das Kulturmedium (16) den Satz von Organismen (32) umfasst, wobei das Kulturmedium (16) in dem Innenraum (36) enthalten ist,
wobei jede Probe (12) Organismen (14) enthält, die zur selben Art gehören,
wobei das Verfahren für jede Probe (12) die folgenden Schritte umfasst:
a) Beleuchten der Probe (12) mit einem Lichtstrahl, der von einer Lichtquelle (20) ausgesendet wird,
b) Erfassen eines ersten Bildes (I₁) der Probe (12) zu einem ersten Zeitpunkt (t₁), wobei das erste Bild (I₁) eine Vielzahl von Beugungsmustern umfasst, wobei jedes der Beugungsmuster durch die Wechselwirkung des Lichtstrahls mit mindestens einem Organismus (14) aus dem Satz von Organismen (32) erzeugt wird,
c) Erhalten eines ersten Indikators (Ind₁) aus dem ersten Bild (I₁), wobei der erste Indikator (Ind₁) repräsentativ für die Menge an Organismen (14) ist, die in der Probe (12) zum ersten Zeitpunkt (t₁) vorhanden sind,
d) Erfassen eines zweiten Bildes (l₂) der Probe (12) zu einem zweiten Zeitpunkt (t₂), wobei das zweite Bild (I₂) eine Vielzahl von Beugungsmustern umfasst, wobei jedes der Beugungsmuster durch die Wechselwirkung des Lichtstrahls mit mindestens einem Organismus (14) aus dem Satz von Organismen (32) erzeugt wird, wobei der zweite Zeitpunkt (t₂) nach dem ersten Zeitpunkt (t₁) liegt,
e) Erhalten eines zweiten Indikators (Ind₂) aus dem zweiten Bild (I₂), wobei der zweite Indikator (Ind₂) repräsentativ für die Menge an Organismen (14) ist, die in der Probe (12) zum zweiten Zeitpunkt (t₂) vorhanden sind
f) Vergleich des ersten Indikators (Ind₁) und des zweiten Indikators (lnd₂), und
g) Bestimmen mindestens eines Merkmals, das sich auf den Satz von Organismen (32) bezieht, aus dem Ergebnis des Vergleichsschritts, wobei jedes Merkmal das in Schritt g) bestimmt wurde, die Fähigkeit eines Organismus (14) aus dem Satz von Organismen (32) ist, in dem Kulturmedium (16) zu wachsen,
wobei das Verfahren so beschaffen ist, dass mindestens eine der beiden folgenden Aussagen überprüft wird:
- das Kulturmedium (16) variiert in Abhängigkeit von der jeweiligen Probe (12), wobei ein in Schritt g) bestimmtes Merkmal die Art der Organismen (14) ist, und
- das Kulturmedium (16) jeder Probe (12) enthält ein Antibiotikum, wobei die Konzentration des Antibiotikums in dem Kulturmedium (16) je nach betrachteter Probe (12) variiert, wobei ein in Schritt g) bestimmtes Merkmal die minimale Hemmkonzentration des Organismus (14) gegenüber dem Antibiotikum ist,
**dadurch gekennzeichnet, dass** das Verfahren ferner folgenden Schritt umfasst:
- Maskieren eines Teils der Seitenwand (40) jeder Einfassung (30) durch Einfügen einer Maske (70) zwischen die Lichtquelle (20) und jede Probe (12), wobei die Maske (70) einen lichtundurchlässigen Teil (72) umfasst, wobei der lichtundurchlässige Teil (72) räumlich so angeordnet ist, dass verhindert wird, dass in Schritt a) die Seitenwand (40) durch einen Teil des von der Lichtquelle (20) emittierten Lichtstrahls beleuchtet wird, der nicht mit dem Kulturmedium (16) der Probe (12) interagiert hat.

2. Verfahren nach Anspruch 1, wobei mindestens ein Kulturmedium (16) ein flüssiges Medium ist.

3. Verfahren nach Anspruch 1 oder 2, wobei jedes Kulturmedium (16) ein flüssiges Medium ist.

4. Verfahren nach einem der Ansprüche 1 bis 3, wobei die in Schritt a) verwendete Lichtquelle (20) zeitlich inkohärent ist.

5. Verfahren nach Anspruch 4, bei dem die Lichtquelle (20) eine lichtemittierende Diode ist.

6. Verfahren nach einem der Ansprüche 1 bis 5, bei dem die Fähigkeit eines Organismus (14) aus dem Satz von Organismen (32), auf dem Kulturmedium (16) zu wachsen, durch Auswertung eines Parameters bestimmt wird, wobei der Parameter gleich einem ersten Wert ist, wenn der erste Indikator (Ind₁) strikt größer als der zweite Indikator (Ind₂) ist, und der Parameter gleich einem zweiten Wert ist, wenn der erste Indikator (Ind₁) kleiner oder gleich dem zweiten Indikator (lnd₂) ist, wobei der erste Wert und der zweite Wert verschieden sind.

7. Verfahren nach einem der Ansprüche 1 bis 6, wobei jedes Bild (I₁, I₂) eine räumliche Intensitätsverteilung aufweist, wobei jeder Schritt des Erhaltens eines Indikators (Ind₁, Ind₂) aus einem entsprechenden Bild (I₁, I₂) einem Schritt entspricht, der Folgendes umfasst:
- Anwenden einer Funktion (k) auf das entsprechende Bild (I₁, I₂), wobei die Funktion (k) zu einem Moment der Ordnung n der räumlichen Intensitätsverteilung des entsprechenden Bildes (I₁, I₂) führt, wenn die Funktion (k) auf das entsprechende Bild (I₁, I₂) angewendet wird, wobei n eine ganze Zahl größer oder gleich 1, vorzugsweise gleich 4, ist.

8. Verfahren nach einem der Ansprüche 1 bis 6, wobei jeder Schritt des Erhaltens eines Indikators (Ind₁, Ind₂) aus einem entsprechenden Bild (I₁, I₂) einem Schritt entspricht, der Folgendes umfasst:
- Identifikation jedes Beugungsmusters, das in dem entsprechenden (I₁, I₂) Bild (I₁, I₂) vorhanden ist, und
- Bestimmung der Fläche jedes identifizierten Beugungsmusters.

9. Verfahren nach einem der Ansprüche 1 bis 6, wobei jeder Schritt des Erhaltens eines Indikators (Ind₁, Ind₂) aus einem entsprechenden Bild (I₁, I₂) einem Schritt entspricht, der Folgendes umfasst:
- Identifizierung jedes Beugungsmusters, das in dem entsprechenden Bild (I₁, I₂) vorhanden ist, und
- Bestimmung der Anzahl der identifizierten Beugungsmuster.

10. Beobachtungssystem (10) einer Vielzahl von Proben (12), wobei jede Probe (12) umfasst:
- eine Einfassung (30), die einen Schacht bildet, der eine Wand umfasst, die zumindest teilweise einen Innenraum (36) begrenzt,
- einen Satz von Organismen (32), der eine Vielzahl von Organismen (14) umfasst, und
- ein Kulturmedium (16), wobei das Kulturmedium (16) den Satz von Organismen (32) umfasst, wobei das Kulturmedium (16) in dem Innenraum (36) enthalten ist,
wobei jede Probe (12) Organismen (14) enthält, die zur selben Art gehören,
das Beobachtungssystem (10) umfassend:
- eine Lichtquelle (20), die dazu geeignet ist, einen Lichtstrahl auszusenden,
- einen Halter (24), der dazu geeignet ist, die Proben s(12) so aufzunehmen, dass eine der Proben (12) durch den Lichtstrahl beleuchtet wird, den die Lichtquelle (20) auszusenden geeignet ist,
- einen Detektor (26), der geeignet ist, zu erfassen:
∘ ein erstes Bild (I₁) der Probe (12) zu einem ersten Zeitpunkt (t₁), wobei das erste Bild (I₁) eine Vielzahl von Beugungsmustern umfasst, wobei jedes der Beugungsmuster durch die Wechselwirkung des Lichtstrahls, den die Lichtquelle (20) auszusenden vermag, mit mindestens einem Organismus (14) aus dem Satz von Organismen (32) erzeugt wird, und
∘ ein zweites Bild (I₂) der Probe (12) zu einem zweiten Zeitpunkt (t₂), wobei das zweite Bild (I₂) eine Vielzahl von Beugungsmustern umfasst, wobei jedes der Beugungsmuster erzeugt wird durch die Wechselwirkung des Lichtstrahls, den die Lichtquelle (20) auszusenden vermag, mit mindestens einem Organismus (14) aus dem Satz von Organismen (32), wobei der zweite Zeitpunkt (t₂) nach dem ersten Zeitpunkt (t₁) liegt, und
- einen Rechner (28), der zu Folgendem geeignet ist:
∘ Erhalten eines ersten Indikators (Ind₁) aus dem ersten Bild (I₁), das der Detektor (26) zu erhalten geeignet ist, wobei der erste Indikator (Ind₁) repräsentativ für die Menge an Organismen (14) ist, die in der Probe (12) zum ersten Zeitpunkt (t₁) vorhanden sind,
∘ Erhalten eines zweiten Indikators (lnd₂) aus dem zweiten Bild (I₂), wobei der zweite Indikator (Ind₂) repräsentativ für die Menge an Organismen (14) ist, die in der Probe (12) zum zweiten Zeitpunkt (t₂) vorhanden sind,
∘ den ersten Indikator (Ind₁) und den zweiten Indikator (Ind₂) vergleichen und
∘ Bestimmen mindestens eines Merkmals bezüglich des Satzes von Organismen (32) aus dem Ergebnis des Vergleichs des ersten Indikators (Ind₁) mit dem zweiten Indikator (Ind₂), wobei jedes ermittelte Merkmal die Fähigkeit eines Organismus (14) aus dem Satz von Organismen (32) ist, in dem Kulturmedium (16) zu wachsen,
wobei das Beobachtungssystem (10) so beschaffen ist, dass mindestens eine der beiden folgenden Aussagen erfüllt wird:
- das Kulturmedium (16) je nach betrachteter Probe (12) variiert, wobei ein bestimmtes Merkmal die Art der Organismen (14) ist, und
- das Kulturmedium (16) jeder Probe (12) ein Antibiotikum enthält, wobei die Konzentration des Antibiotikums in dem Kulturmedium (16) je nach betrachteter Probe (12) variiert, wobei ein bestimmtes Merkmal die minimale Hemmkonzentration des Organismus (14) gegenüber dem Antibiotikum ist,
das Beobachtungssystem (10) eine Platte (60) zum Beobachten der Vielzahl von Proben (12) umfasst, wobei die Platte (60) umfasst:
- die Vielzahl von Einfassungen (30), wobei die Wand (34) jeder Einfassung (30) eine Seitenwand (40) aufweist,
wobei das Beobachtungssystem (10) **dadurch gekennzeichnet ist, dass** das Beobachtungssystem (10) außerdem umfasst:
- eine Maske (70) mit einem lichtundurchlässigen Abschnitt (72), wobei der lichtundurchlässige Abschnitt (72) räumlich so angeordnet ist, dass er verhindert, dass, wenn die Platte (60) durch den Lichtstrahl beleuchtet wird, den die Lichtquelle (20) zu emittieren geeignet ist, die Seitenwand (40) jeder Einfassung (30) durch einen Teil des Lichtstrahls, den die Lichtquelle (20) auszusenden vermag, beleuchtet wird, wobei der Teil des Lichtstrahls nicht mit dem Kulturmedium (16), das in dem Innenraum (36) der betreffenden Einfassung (30) enthalten ist, in Wechselwirkung getreten ist.

## Claims

1. A method for observing several samples (12), each sample (12) comprising:
- an enclosure (30) forming a well and comprising a wall (34) delimiting at least in part an interior space (36), the wall (34) of each enclosure (30) comprising a side wall (40),
- a set of organisms (32) comprising several organisms (14), and
- a culture medium (16), said culture medium (16) comprising the array of organisms (32), said culture medium (16) being contained within the interior space (36),
each sample (12) containing organisms (14) belonging to the same species,
the method comprising, for each sample (12), the steps of:
a) illumination of the sample (12) by a light beam emitted by a light source (20),
b) acquisition of a first image (I₁) of the sample (12) at a first time (t₁), the first image (I₁) comprising several diffraction patterns, each of said diffraction patterns being generated by the interaction of said light beam with at least one organism (14) of the set of organisms (32),
c) obtaining a first indicator (Ind₁) from the first image (I₁), the first indicator (Ind₁) being representative of the quantity of organisms (14) present in said sample (12) at the first instant (t₁),
d) acquisition of a second image (I₂) of the sample (12) at a second instant (t₂), the second image (I₂) comprising several diffraction patterns, each of said diffraction patterns being generated by the interaction of said light beam with at least one organism (14) of the set of organisms (32), the second instant (t₂) being later than the first instant (t₁),
e) obtaining a second indicator (Ind₂) from the second image (I₂), the second indicator (Ind₂) being representative of the quantity of organisms (14) present in said sample (12) at the second instant (t₂)
f) comparison of the first indicator (Ind₁) and the second indicator (Ind₂), and
g) determining at least one characteristic relating to the set of organisms (32) from the result of the comparison step, each characteristic determined in step g) being the ability of an organism (14) of the set of organisms (32) to grow in the culture medium (16),
the method being such that at least one of the following two propositions is verified:
- the culture medium (16) varies according to the sample (12) in question, a characteristic determined in step g) being the species of organisms (14), and
- the culture medium (16) of each sample (12) comprises an antibiotic, the concentration of antibiotic in the culture medium (16) varying according to the sample (12) in question, a characteristic determined in step g) being the minimum inhibitory concentration of the organism (14) to the antibiotic,
the method being **characterised in that** it further comprises a step of:
- masking a part of the side wall (40) of each enclosure (30) by interposing a mask (70) between the light source (20) and each sample (12), the mask (70) comprising an opaque part (72), the opaque part (72) being arranged spatially to prevent, during step a), the side wall (40) from being illuminated by part of the light beam emitted by the light source (20) which has not interacted with the culture medium (16) of the sample (12).

2. A method according to claim 1, in which at least one culture medium (16) is a liquid medium.

3. A method according to claim 1 or 2, wherein each culture medium (16) is a liquid medium.

4. A method according to any one of claims 1 to 3, wherein the light source (20) used in step a) is temporally incoherent.

5. A method according to claim 4, in which the light source (20) is a light-emitting diode.

6. A method according to any one of claims 1 to 5, in which the ability of an organism (14) of the set of organisms (32) to grow on the culture medium (16) is determined by evaluating a parameter, the parameter is equal to a first value when the first indicator (Ind₁) is strictly greater than the second indicator (Ind₂) and the parameter is equal to a second value when the first indicator (Ind₁) is less than or equal to the second indicator (Ind₂), the first value and the second value being distinct.

7. A method according to any one of claims 1 to 6, each image (I₁, I₂) has a spatial intensity distribution, each step of obtaining an indicator (Ind₁, Ind₂) from a corresponding image (I₁, I₂) comprising a step of:
- application of a function (k) to the corresponding image (I₁, I₂), said function (k) resulting in a moment of order n of the spatial intensity distribution of the corresponding image (I₁, I₂) when said function (k) is applied to the corresponding image (I₁, I₂), n being an integer greater than or equal to 1, preferably equal to 4.

8. A method according to any one of claims 1 to 6, in which each step of obtaining an indicator (Ind₁, Ind₂) from a corresponding image (I₁, I₂) comprises a step of:
- identification of each diffraction pattern present in the corresponding image (I₁, I₂), and
- determination of the surface area of each diffraction pattern identified.

9. A method according to any one of claims 1 to 6, in which each step of obtaining an indicator (Ind₁, Ind₂) from a corresponding image (I₁, I₂) comprises a step of:
- identification of each diffraction pattern present in the corresponding image (Ind₁, Ind₂), and
- determination of the number of diffraction patterns identified.

10. A system for observing (10) several samples (12), each sample (12) comprising:
- an enclosure (30) forming a well comprising a wall at least partly delimiting an interior space (36),
- a set of organisms (32) comprising several organisms (14), and
- a culture medium (16), said culture medium (16) comprising the array of organisms (32), said culture medium (16) being contained within the interior space (36),
each sample (12) containing organisms (14) belonging to the same species,
the observation system (10) comprising:
- a light source (20) adapted to emit a beam of light,
- a support (24) adapted to receive the samples (12) so that one of the samples (12) is illuminated by the light beam that the light source (20) is adapted to emit,
- a detector (26) adapted to acquire:
∘ a first image (I₁) of the sample (12) at a first instant (t₁), the first image (I₁) comprising several diffraction patterns, each of said diffraction patterns being generated by the interaction of said light beam that the light source (20) is adapted to emit with at least one organism (14) of the set of organisms (32), and
∘ a second image (I₂) of the sample (12) at a second instant (t₂), the second image (I₂) comprising several diffraction patterns, each of said diffraction patterns being generated by the interaction of said light beam which the light source (20) is adapted to emit with at least one organism (14) of the set of organisms (32), the second instant (t₂) being later than the first instant (t₁), and
- a computer (28) adapted to:
∘ obtaining a first indicator (Ind₁) from the first image (I₁) which the detector (26) is adapted to obtain, the first indicator (Ind₁) being representative of the quantity of organisms (14) present in said sample (12) at the first instant (t₁),
∘ obtaining a second indicator (Ind₂) from the second image (I₂), the second indicator (Ind₂) being representative of the quantity of organisms (14) present in said sample (12) at the second instant (t₂),
∘ comparing the first indicator (Ind₁) and the second indicator (Ind₂), and
∘ determining at least one characteristic relating to the set of organisms (32) from the result of the comparison of the first indicator (Ind₁) with the second indicator (Ind₂), each determined characteristic being the ability of an organism (14) of the set of organisms (32) to grow in the culture medium (16),
the observation system (10) being such that at least one of the following two propositions is verified:
- the culture medium (16) varies according to the sample (12) in question, a given characteristic being the species of organisms (14), and
- the culture medium (16) of each sample (12) comprises an antibiotic, the antibiotic concentration in the culture medium (16) varying according to the sample (12) in question, a given characteristic being the minimum inhibitory concentration of the organism (14) to the antibiotic,
the observation system (10) comprising a plate (60) for observing the plurality of samples (12), the plate (60) comprising:
- the plurality of enclosures (30), the wall (34) of each enclosure (30) comprising a side wall (40),
the observation system (10) being **characterised in that** the observation system (10) further comprises:
- a mask (70) comprising an opaque part (72), the opaque part (72) being arranged spatially to prevent, when the plate (60) is illuminated by the light beam that the light source (20) is adapted to emit, the side wall (40) of each enclosure (30) is illuminated by part of the light beam that the light source (20) is adapted to emit, the part of the light beam not having interacted with the culture medium (16) contained in the interior space (36) of the enclosure (30) in question.
